# EUROPÄISCHE PATENTSCHRIFT

(11) **EP 3 217 060 B1**
(45) Veröffentlichungstag und Bekanntmachung des Hinweises auf die Patenterteilung: **24.10.2018**
(21) Anmeldenummer: 16159996.4
(22) Anmeldetag: 11.03.2016
(51) Int. Cl.: F16L 39/00, F16L 9/18, F23J 13/02

(54) **DOPPELROHRBOGENSYSTEM**
DOUBLE TUBE SHEET SYSTEM
SYSTEME DE RACCORD COUDE DOUBLE

(43) Veröffentlichungstag der Anmeldung: 13.09.2017
(73) Patentinhaber: Centrotherm Systemtechnik GmbH, 59929 Brilon (DE)
(72) Erfinder: LIESE, Ralf, 59909 Bestwig- OT Ostwig (DE)
(74) Vertreter: Zenz Patentanwälte Partnerschaft mbB

(56) Entgegenhaltungen:
- EP-A1- 1 134 476
- EP-A2- 0 867 652
- EP-A2- 1 167 858
- US-A- 5 186 502

## Beschreibung

Die Erfindung richtet sich auf ein Doppelrohrbogensystem mit einem Außenrohrbogen und einem von dem Außenrohrbogen umgebenen Innenrohrbogen, wobei der Außenrohrbogen einen ersten Außenrohrbogenabschnitt und einen zweiten Außenrohrbogenabschnitt umfasst, die über einen Außenbogenabschnitt miteinander verbunden sind, wobei der Innenrohrbogen einen ersten Innenrohrbogenabschnitt und einen zweiten Innenrohrbogenabschnitt umfasst, die über einen Innenbogenabschnitt miteinander verbunden sind, wobei der erste Außenrohrbogenabschnitt und der erste Innenrohrbogenabschnitt konzentrisch zu einer ersten Längsachse angeordnet sind, wobei der zweite Außenrohrbogenabschnitt und der zweite Innenrohrbogenabschnitt konzentrisch zu einer zweiten Längsachse angeordnet sind, und wobei der Außenrohrbogen und der Innenrohrbogen über eine formschlüssige Verbindung miteinander verbunden sind.

Für den Luft-Abgas-Betrieb von modernen Wärmeerzeugern, insbesondere von Brennwert- oder Niedertemperaturgeräten, werden zunehmend konzentrisch angeordnete, doppelwandige Rohrleitungssysteme eingesetzt, um einerseits das bei der Verbrennung entstehende Abgas sicher abzuführen und andererseits die zur Verbrennung benötigte Zuluft durch eine platzsparende Rohrleitungsführung und bei einer der Energieeinsparung dienenden Zuluftvorwärmung zuzuführen. Selbstverständlich ist die vorliegende Erfindung nicht auf den Luft-Abgas-Betrieb von Wärmeerzeugern beschränkt, sondern sie kann auch überall dort eingesetzt werden, wo doppelwandige Rohrsysteme erforderlich sind.

Bei Doppelrohrbögen von doppelwandigen Rohrsystemen ist es bekannt, dass zur konzentrischen Anordnung von Innenrohrbogen zu Außenrohrbogen Verbindungen vorgesehen sind, bei denen der Außenrohrbogen mit dem Innenrohrbogen vernietet oder verschraubt wird.

Aus der EP 867 652 B1 ist zum Beispiel ein konzentrischer Doppelrohrbogen bzw. ein Doppelrohrbogensystem der eingangs bezeichneten Art bekannt. Bei diesem bekannten Doppelrohrbogensystem weist der Innenrohrbogen auf seiner Außenseite Zapfen mit quadratischem Querschnitt auf, die einstückig mit dem Innenrohrbogen ausgebildet sind. Die Zapfen sind paarig und diametral zueinander angeordnet und weisen ein Loch auf, wohingegen auf der Innenseite des Außenrohrbogens zwei Plattformen ausgebildet sind, die jeweils ein Loch aufweisen. Eine jeweilige Plattform weist radial abstehende und L-förmig ausgebildete Seitenränder auf, so dass die Zapfen einen exakten Sitz finden. In die Löcher des Innenrohrbogens und des Außenrohrbogens, die bei exaktem Sitz der Zapfen fluchtend zueinander ausgerichtet sind, können dann Schrauben eingeschraubt werden, die eine formschlüssige Verbindung von Außenrohrbogen und Innenrohrbogen gewährleisten. Nachteilig bei diesem Stand der Technik ist die Verwendung von Werkzeug, um die Schrauben zur Herstellung der formschlüssigen Verbindung einzuschrauben.

Ferner ist aus der EP 1 134 476 A1 ein Rohrbogen bekannt, welcher ein Innenrohr zum Abführen von Verbrennungsluft und ein das Innenrohr umgebenes Außenrohr aufweist, wobei das Außenrohr konzentrisch um das Innenrohr herum angeordnet ist, um einen Ringraum zum Zuführen von Verbrennungsluft zu definieren. Das Innenrohr und das Außenrohr weisen einen fließend gekrümmten Verlauf auf, wobei quer zu einer Hauptebene Luftleitwände im Ringraum angeordnet sind, die im wesentlichen der Krümmung des Rohrbogens folgen.

Aus der US 5,186,502 ist ein Doppelrohrsystem zum Verbinden von Abschnitten eines Doppelrohrs bekannt. Das System umfasst ein äußeres Einkapselungsgehäuse, ein inneres Trägergehäuse und eine Vielzahl von Rückhalteeinrichtungen, wobei das Einkapselungsgehäuse eine Vielzahl von offenen Enden aufweist. Jedes offene Ende ist so ausgebildet, dass es sicher mit einem offenen Ende eines Einkapselungsrohres verbunden werden kann. Das Trägergehäuse weist ferner eine Vielzahl von offenen Enden auf, die zur Positionierung innerhalb des Einkapselungsgehäuses ausgebildet und angeordnet sind. Jedes offene Ende des Trägergehäuses ist dabei derart ausgebildet, dass es sicher mit einem offenen Ende eines Trägerrohres verbunden werden kann. Eine Rückhaltevorrichtung ist für jedes offene Ende des Einkapselungsgehäuses vorgesehen, wobei die Rückhaltevorrichtung das Trägergehäuse sicher am Einkapselungsgehäuse befestigt, wodurch das Ausdehnen und Zusammenziehen des Trägerrohres und des Einkapselungsrohres verhindert wird.

Schließlich ist aus der EP 1 167 858 A2 ein Rohrbogen zum Transport von abrasiven Materialien bekannt, welcher zwei endseitige Kupplungsbunde aus jeweils einem Außenring und einem Innenring besitzt. Zwischen den beiden Innenringen im radialen Abstand zu einem Mantelbogen erstreckt sich ein Innenbogen, der aus einem gegenüber dem Material des Mantelbogens verschleißfesteren Werkstoff besteht und unter radialer Abstützung am Mantelbogen hinsichtlich seines Innenquerschnitts an beiden Enden zu den Innenquerschnitten der Innenringe koaxial ausgerichtet ist.

Der Erfindung liegt die Aufgabe zugrunde, eine Lösung zu schaffen, die auf konstruktiv einfache Weise und kostengünstig ein vereinfachtes und verbessertes Doppelrohrbogensystem bereitstellt, das ohne Hilfsmittel und Werkzeug leicht montiert werden kann, wobei gleichzeitig die für den Zusammenbau erforderliche Arbeitszeit auf ein Minimum reduziert werden soll.

Bei einem Doppelrohrbogensystem der eingangs bezeichneten Art wird diese Aufgabe erfindungsgemäß dadurch gelöst, dass die formschlüssige Verbindung eine Rastverbindung ist, die wenigstens zwei Fixierungsstege, die sich von der Innenseite des Außenrohrbogens radial und wenigstens in Richtung der ersten Längsachse erstrecken, und wenigstens zwei Einstecktaschen, die sich von der Außenseite des Innenrohrbogens radial und wenigstens in Richtung der ersten Längsachse erstrecken, umfasst, wobei ein jeweiliger Fixierungssteg in eine zugeordnete Einstecktasche eingeschoben ist und mit dieser formschlüssig in Eingriff steht.

Vorteilhafte und zweckmäßige Ausgestaltungen und Weiterbildungen der Erfindung ergeben sich aus den entsprechenden Unteransprüchen.

Durch die Erfindung wird eine Möglichkeit bereitgestellt, mit welcher auf konstruktiv einfache Weise eine Reduzierung der Arbeitszeit zur Montage eines Doppelrohrbogensystems erzielt wird. Die Montage des Doppelrohrbogensystems kann manuell ohne Verwendung eines Werkzeuges auf zeitsparende Art und Weise erfolgen. Ferner unterliegt das Doppelrohrbogensystem keinem Einfluss eines Monteurs oder Handwerkers. Da die Rastverbindung keine Schrauben oder dergleichen verwendet, muss auch kein einzuhaltendes Anzugsmoment von Schrauben beachtet werden. Die Kontrolle, ob die Rastverbindung des Doppelrohrbogensystems ordnungsgemäß errichtet und die Montage des Doppelrohrbogens korrekt erfolgt ist, kann mittels einfacher optischer und manueller Kontrolle durchgeführt werden.

In Ausgestaltung des Doppelrohrbogensystems sieht die Erfindung vor, dass eine jeweilige Einstecktasche U-förmig mit einer Einstecköffnung, einem Führungsschenkel und einem parallel zum Führungsschenkel verlaufenden Rastschenkel ausgebildet ist, wobei der Rastschenkel eine größere Längserstreckung entlang der ersten Längsachse als der Führungsschenkel aufweist, und wobei an dem freien Ende des Rastschenkels ein hakenförmiger Ansatz angeformt ist, der ein Längsende des zugeordneten Fixierungsstegs hintergreift. Ein jeweiliger Fixierungssteg kann folglich bei der Montage des Doppelrohrsystems zwischen Rastschenkel und Führungsschenkel eingeschoben werden, bis der hakenförmige Ansatz hinter ein Längsende des Fixierungssteges gelangt, wodurch der Fixierungssteg in der Einstecktasche verrastet ist.

Zur Stabilisierung der Rastverbindung sieht die Erfindung in weiterer Ausgestaltung vor, dass sich auf der Außenseite des Innenrohrbogens wenigstens ein Stützansatz radial erstreckt, wobei der wenigstens eine Stützansatz mit Bezug auf den Umfang des Innenrohrbogens mittig zwischen den wenigstens zwei Einstecktaschen auf der Außenseite des Innenrohrbogens angeformt ist und sich auf der Innenfläche des Außenrohrbogens abstützt.

Dabei ist es von besonderem Vorteil, wenn in Ausgestaltung der Erfindung sich der wenigstens eine Stützansatz in Richtung der zweiten Längsachse erstreckt. Mit Hilfe der Rastverbindung, bei der wenigstens zwei Fixierungsstege in zugeordnete Einstecktaschen verrastet sind, und dem wenigstens einen Stützansatz steht der Innenrohrbogen an drei Stellen mit dem Außenrohrbogen in Kontakt, so dass eine stabile, sichere und konzentrische Anordnung von Innenrohrbogen und Außenrohrbogen erzielt wird.

Zur genauen Positionierung des wenigstens einen Stützansatzes an dem Außenrohrbogen sieht die Erfindung in Ausgestaltung vor, dass wenigstens ein U-förmig ausgebildetes Haltemittel auf der Innenseite des Außenrohrbogens angeformt ist, das mit Bezug auf den Umfang des Innenrohrbogens mittig zwischen den wenigstens zwei Fixierungsstegen angeordnet ist, wobei der wenigstens eine Stützansatz zwischen den beiden parallel zueinander verlaufenden Schenkeln des U-förmig ausgebildeten Haltemittels angeordnet ist.

Um die Möglichkeit einer konventionellen Schraubverbindung zwischen dem Innenrohrbogen und dem Außenrohrbogen vorzusehen, beispielsweise für den Fall, dass die formschlüssige Verbindung eine Beschädigung aufweist, defekt ist oder verstärkt werden soll, sieht die Erfindung in weiterer Ausgestaltung vor, dass der wenigstens eine Stützansatz eine Bohrung aufweist, die für ein von der Außenseite des Außenrohrbogens eingebrachtes Einschraubmittel vorgesehen ist.

Als besonders stabile Lösung für das Doppelrohrbogensystem hat es sich erwiesen, wenn die wenigstens zwei Fixierungsstege zentral zwischen dem ersten Außenrohrbogenabschnitt und dem zweiten Außenrohrbogenabschnitt an dem Außenbogenabschnitt ausgebildet sind und dass die wenigstens zwei Einstecktaschen zentral zwischen dem ersten Innenrohrbogenabschnitt und dem zweiten Innenrohrbogenabschnitt an dem Innenbogenabschnitt ausgebildet sind.

Zur Erleichterung der Montage und Sicherung der Rastverbindung sieht die Erfindung in Ausgestaltung vor, dass sich auf der Außenseite des Innenrohrbogens wenigstens ein Führungsansatz radial und in Richtung der ersten Längsachse erstreckt, wobei der wenigstens eine Führungsansatz mit einem T-förmigen Kopf ausgebildet ist. Der Führungsansatz unterstützt sowohl das Einbringen als auch bei Demontage das Ausbringen des Innenrohrbogens in und aus dem Außenrohrbogen.

Zur seitlichen Führung bei der Demontage des Doppelrohrbogensystems, aber insbesondere zur Verhinderung, dass die Rastverbindung sich lösen kann, sieht die Erfindung in weiterer Ausgestaltung vor, dass wenigstens ein U-förmig ausgebildetes Aufnahmemittel derart korrespondierend zu dem wenigstens einen Führungsansatz auf der Innenseite des Außenrohrbogens angeformt ist, dass der T-förmig ausgebildete Kopf des Führungsansatzes zwischen den parallel zueinander verlaufenden Schenkeln des U-förmig ausgebildeten Aufnahmemittels angeordnet ist und an dem die parallel zueinander verlaufenden Schenkel verbindenden Abschnitt des Aufnahmemittels eine Bewegung des Innenrohrbogens in Richtung des Abschnitts blockierend anliegt. Auf diese Weise wird verhindert, dass die Fixierungsstege aus den zugeordneten Einstecköffnungen der Führungsschenkel bewegt werden können, wenn das Doppelrohrbogensystem zusammengebaut ist.

Als besonders vorteilhaft hat es sich erwiesen, wenn das wenigstens eine Aufnahmemittel am Übergang von dem zweiten Außenrohrbogenabschnitt zu dem Außenbogenabschnitt ausgebildet ist und dass der wenigstens eine Führungsansatz am Übergang von dem zweiten Innenrohrbogenabschnitt zu dem Innenbogenabschnitt ausgebildet ist.

Für eine stabile und sichere konzentrische Anordnung der beiden Rohrbögen (Innenrohrbogen und Außenrohrbogen) mittels der Rastverbindung sieht die Erfindung in Ausgestaltung vor, dass die wenigstens zwei Fixierungsstege diametral zueinander liegend auf gegenüberliegenden Seiten des Außenrohrbogens angeordnet sind und dass die wenigstens zwei Einstecktaschen diametral zueinander liegend auf gegenüberliegenden Seiten des Innenrohrbogens angeordnet sind.

Zur Erleichterung der Montage und Demontage des Doppelrohrbogensystems ist vorgesehen, dass der Innenrohrbogen aus den jeweiligen Mündungsrändern des Außenrohrbogens hervorsteht.

Für den Anschluss an ein weiterführendes Leitungssystem hat es sich als günstig erwiesen, wenn die erste Längsachse und die zweite Längsachse im Wesentlichen rechtwinklig oder um einen Winkel zwischen 87° und 89° zueinander geneigt angeordnet sind.

Zur Prüfung und zu Wartungszwecken des Systems sieht die Erfindung in weiterer Ausgestaltung vor, dass der Innenrohrbogen einen kreisrunden Durchbruch aufweist, wobei wenigstens zwei Haltevorsprünge von der Außenseite des Innenrohrbogens radial hervorstehen, die diametral gegenüberliegend an dem kreisrunden Durchbruch angeordnet sind und mit jeweils einer zum Durchbruch gerichteten und hakenartig ausgebildeten Nase versehen sind, die eine Oberseite eines in den Durchbruch eingesetzten Deckelelements hintergreift.

Diesbezüglich sieht die Erfindung schließlich vor, dass der Außenrohrbogen eine Revisionsöffnung aufweist, die mit Hilfe eines Deckels verschlossen ist.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weiter Einzelheiten, Merkmale und Vorteile des Gegenstandes der Erfindung ergeben sich aus der nachfolgenden Beschreibung im Zusammenhang mit der Zeichnung, in der beispielhaft bevorzugte Ausführungsbeispiele der Erfindung dargestellt sind. In der Zeichnung zeigt:
Figur 1 ein erfindungsgemäßes Doppelrohrbogensystem gemäß einer ersten Ausführungsform in perspektivische Ansicht,
Figur 2 das Doppelrohrbogensystem aus Figur 1 in einer perspektivischen Einzelteildarstellung,
Figur 3 das Doppelrohrbogensystem aus Figur 1 in einer seitlichen Schnittansicht,
Figur 4 das Doppelrohrbogensystem aus Figur 1, wobei ein Abschnitt eines Außenrohrbogens des Doppelrohrbogensystems weggeschnitten ist,
Figur 5 einen Innenrohrbogen des Doppelrohrbogensystems aus Figur 1 in perspektivischer Ansicht,
Figur 6 eine Draufsicht auf den Innenrohrbogen aus Figur 5,
Figur 7 eine seitliche Schnittansicht des Außenrohrbogens des Doppelrohrbogensystems aus Figur 1,
Figur 8 eine Vorderansicht auf den Außenrohrbogen des Doppelrohrbogensystems aus Figur 1,
Figur 9 eine Perspektivansicht auf den Außenrohrbogen des Doppelrohrbogensystems aus Figur 1 mit zum Teil weggeschnittenen Seitenwänden,
Figur 10 eine Perspektivansicht auf das Doppelrohrbogensystem aus Figur 1 für einen Mittelschnitt,
Figur 11 eine perspektivische Vorderansicht auf das Doppelrohrbogensystem aus Figur 1,
Figur 12 ein erfindungsgemäßes Doppelrohrbogensystem gemäß einer zweiten Ausführungsform in perspektivische Ansicht,
Figur 13 das Doppelrohrbogensystem aus Figur 12 in einer perspektivischen Einzelteildarstellung,
Figur 14 das Doppelrohrbogensystem aus Figur 12 in einer seitlichen Schnittansicht,
Figur 15 das Doppelrohrbogensystem aus Figur 12, wobei ein Abschnitt eines Außenrohrbogens des Doppelrohrbogensystems weggeschnitten ist,
Figur 16 einen Innenrohrbogen des Doppelrohrbogensystems aus Figur 12 in perspektivischer Ansicht,
Figur 17 eine Draufsicht auf den Innenrohrbogen aus Figur 16,
Figur 18 eine seitliche Schnittansicht des Außenrohrbogens des Doppelrohrbogensystems aus Figur 12,
Figur 19 eine Vorderansicht auf den Außenrohrbogen des Doppelrohrbogensystems aus Figur 12 und
Figur 20 eine Perspektivansicht auf den Außenrohrbogen des Doppelrohrbogensystems aus Figur 12 mit zum Teil weggeschnittenen Seitenwänden.

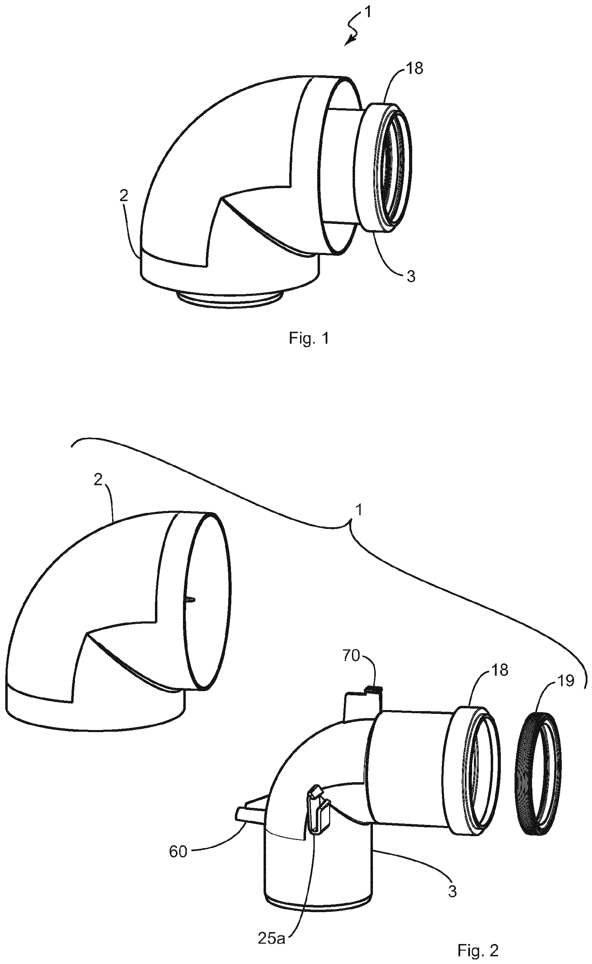

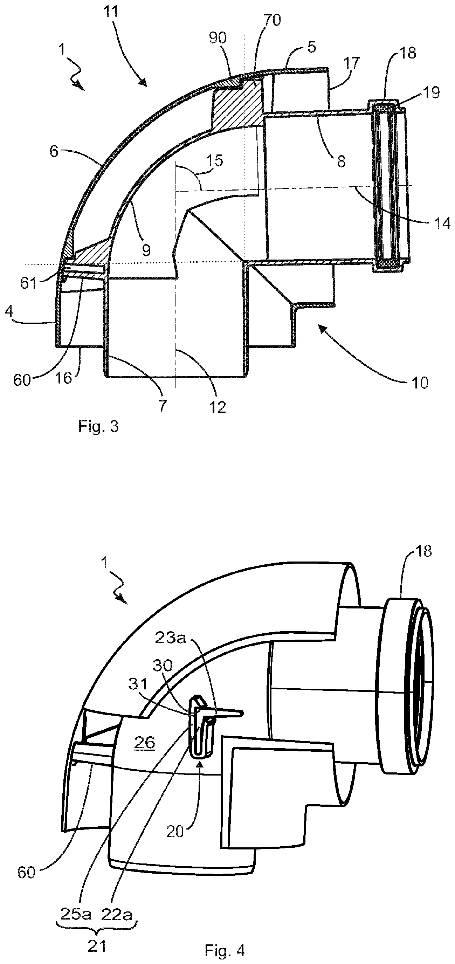

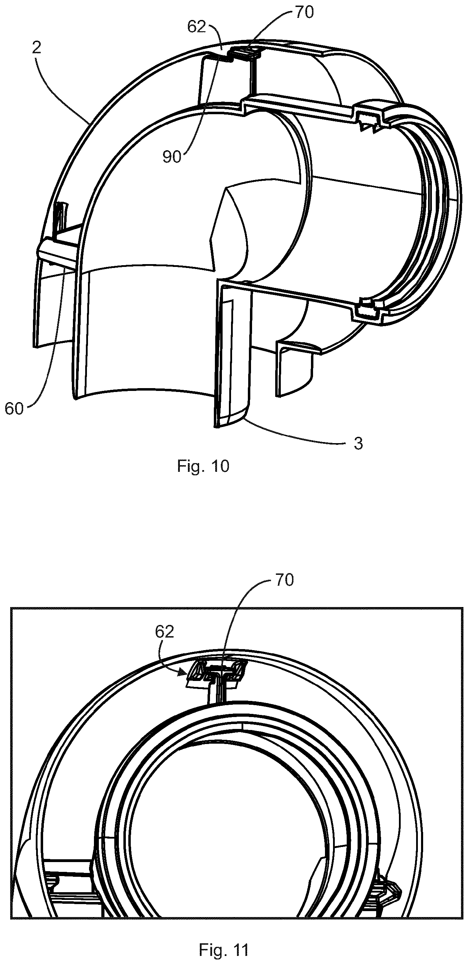

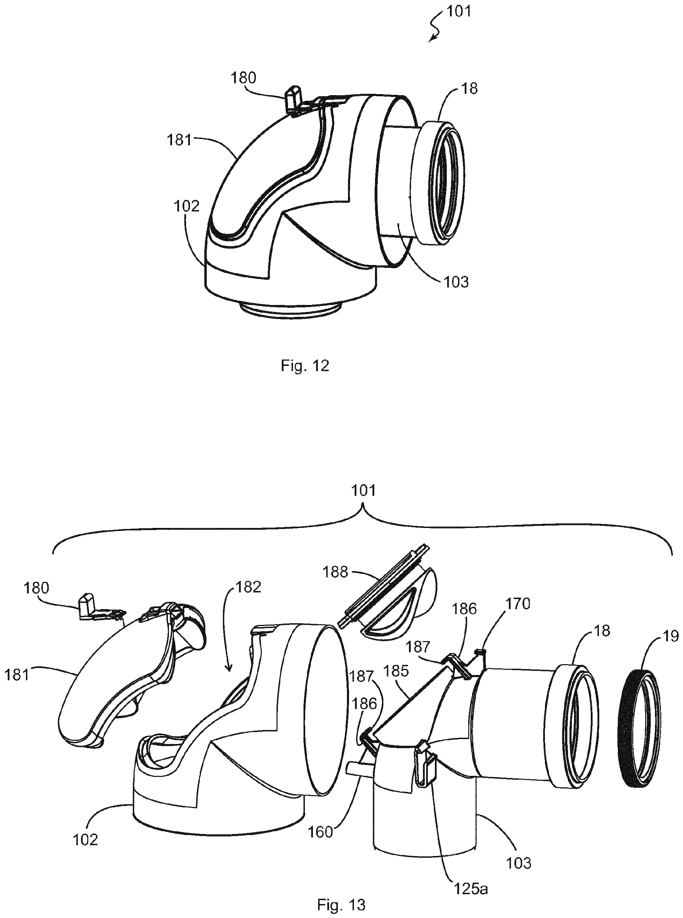

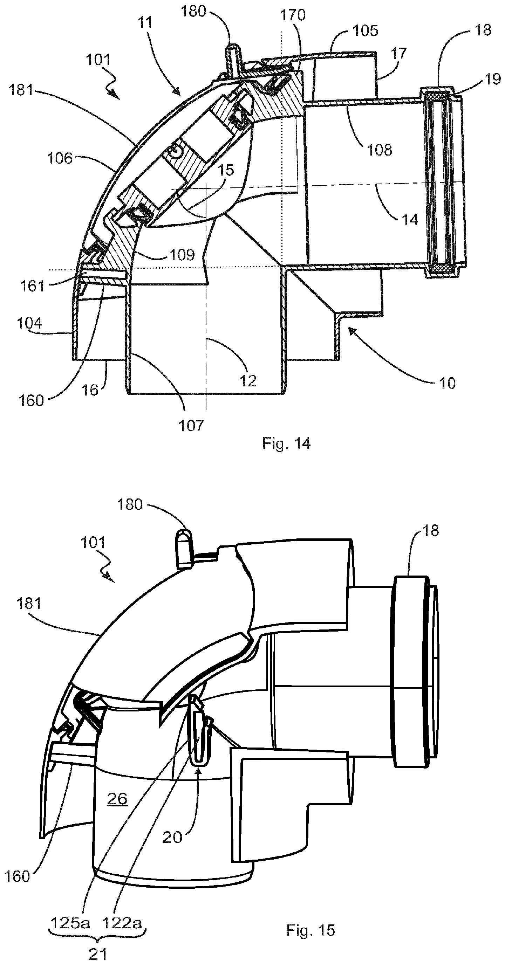

In den Figuren 1 bis 11 ist eine erste Ausführungsform eines erfindungsgemäßen Doppelrohrbogensystems 1 gezeigt, wohingegen die Figuren 12 bis 20 eine zweite Ausführungsform eines erfindungsgemäßen Doppelrohrbogensystems 101 zeigen. Beide Ausführungsformen des Doppelrohrbogensystems 1 bzw. 101 weisen jeweils einen Außenrohrbogen 2 bzw. 102 und einen von dem Außenrohrbogen umgebenen Innenrohrbogen 3 bzw. 103 auf, was beispielsweise anhand der Darstellung der Figuren 1 und 2 für die erste Ausführungsform bzw. der Figuren 12 und 13 für die zweite Ausführungsform ersichtlich ist. Wie Figur 3 für die erste Ausführungsform zeigt, umfasst der Außenrohrbogen 2 einen ersten Außenrohrbogenabschnitt 4 und einen zweiten Außenrohrbogenabschnitt 5, die über einen Außenbogenabschnitt 6 miteinander verbunden sind, wohingegen der Innenrohrbogen 3 einen ersten Innenrohrbogenabschnitt 7 und einen zweiten Innenrohrbogenabschnitt 8 umfasst, die über einen Innenbogenabschnitt 9 miteinander verbunden sind. Für die zweite Ausführungsform gilt gleiches, denn wie in Figur 14 gezeigt ist, umfasst der Außenrohrbogen 102 einen ersten Außenrohrbogenabschnitt 104 und einen zweiten Außenrohrbogenabschnitt 105, die über einen Außenbogenabschnitt 106 miteinander verbunden sind, wohingegen der Innenrohrbogen 103 einen ersten Innenrohrbogenabschnitt 107 und einen zweiten Innenrohrbogenabschnitt 108 umfasst, die über einen Innenbogenabschnitt 109 miteinander verbunden sind. Die gepunkteten Linien in den Figuren 3 und 14 deuten dabei die verschiedenen Rohrbogenabschnitte an, wobei zu erkennen ist, dass die ersten Außenrohrbogenabschnitte 4, 104, die zweiten Außenrohrbogenabschnitte 5, 105, die ersten Innenrohrbogenabschnitte 7, 107 und die zweiten Innenrohrbogenabschnitte 8, 108 im Wesentlichen geradlinig verlaufende Rohrabschnitte sind, die am innenseitigen Knick 10 des Doppelrohrbogensystems 1, 101 im Wesentlichen geradlinig aufeinander treffen, wohingegen der Außenbogenabschnitt 6, 106 und der Innenbogenabschnitt 9, 109 heckseitig bzw. am außenseitigen Knick 11 des Doppelrohrbogensystems 1, 101 gerundet bzw. im seitlichen Schnitt bogenförmig verlaufend ausgebildet sind. Selbstverständlich sind auch andere Ausgestaltungen denkbar, bei denen auch innenseitige eine Rundung vorgesehen. Wie ferner den Figuren 3 und 14 zu entnehmen ist, sind der erste Außenrohrbogenabschnitt 4, 104 und der erste Innenrohrbogenabschnitt 7, 107 konzentrisch zu einer ersten Längsachse 12 angeordnet, wohingegen der zweite Außenrohrbogenabschnitt 5, 105 und der zweite Innenrohrbogenabschnitt 8, 108 konzentrisch zu einer zweiten Längsachse 14 angeordnet sind. Für die beiden dargestellten Ausführungsformen sind die erste Längsachse 12 und die zweite Längsachse 14 um einen Winkel 15 von 88,5° zueinander geneigt angeordnet, wobei alternativ auch andere Winkel zwischen 87° und 89° oder eine rechtwinklige Anordnung möglich sind.

Bei beiden Ausführungsformen des Doppelrohrsystems 1, 101 steht der Innenrohrbogen 3, 103 aus den jeweiligen Mündungsrändern 16, 17 des Außenrohrbogens 2, 102 hervor. Ferner weist der Innenrohrbogen 3, 103 ein mit einer Steckmuffe 18 ausgebildetes Längsende auf. Die Steckmuffe 18 ist dabei bei beiden Ausführungsformen an dem jeweiligen zweiten Innenrohrbogenabschnitt 8, 108 ausgebildet, wobei in ihr ein Dichtungsring 19 untergebracht ist (siehe beispielsweise Figuren 2 und 3 für die erste Ausführungsform und die Figuren 13 und 14 für die zweite Ausführungsform). Denkbar sind auch Ausgestaltungen ohne Steckmuffe oder mit Steckmuffen an beiden Rohrbogenenden.

Zur konzentrischen Ausrichtung und zur stabilen Fixierung von Innenrohrbogen 3, 103 und Außenrohrbogen 2, 102 ist eine formschlüssige Verbindung 20 (siehe Figuren 4 und 15) bei beiden Ausführungsformen vorgesehen, durch welche der Außenrohrbogen 2, 102 und der Innenrohrbogen 3, 103 miteinander verbunden sind. Diese formschlüssige Verbindung 20 ist nach Art einer Rastverbindung 21 ausgeführt, die nachstehend beschrieben wird.

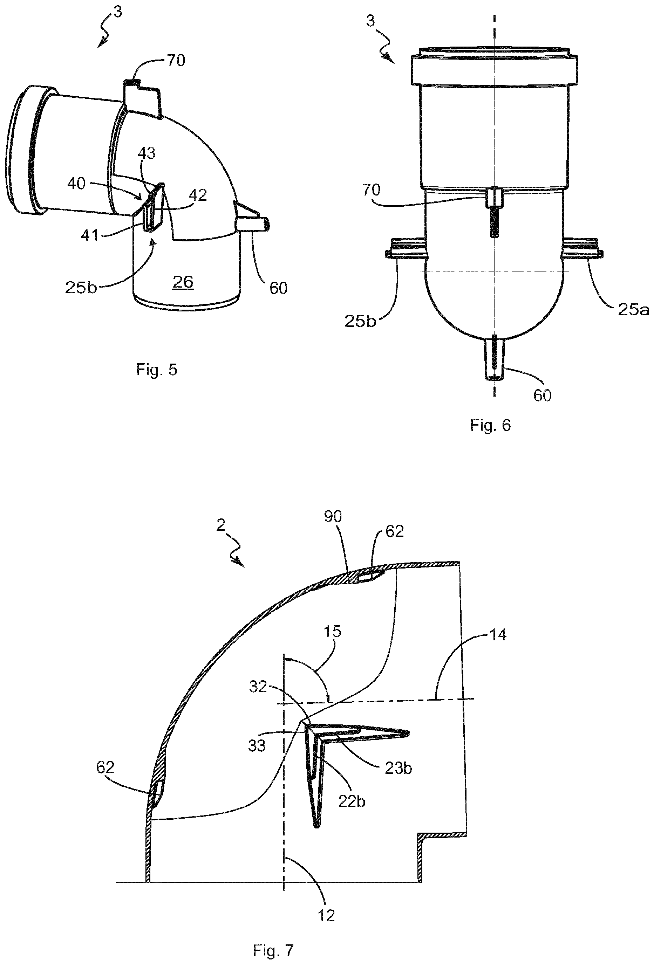

Die Rastverbindung 21 umfasst bei der ersten Ausführungsform mehre Paare von Fixierungsstegen 22a, 22b und 23a, 23b, wobei sich das Paar von Fixierungsstegen 22a und 22b von der Innenseite 24 des Außenrohrbogens 2 radial und in Richtung der ersten Längsachse 12 erstreckt, wohingegen sich das andere Paar von Fixierungsstegen 23a und 23b von der Innenseite 24 des Außenrohrbogens 2 radial und in Richtung der zweiten Längsachse 14 erstreckt. Die Längsenden 30, 31 der Fixierungsstege 22a und 23a sowie die Längsenden 32, 33 der Fixierungsstege 22b und 23b laufen aufeinander zu und sind derart miteinander verbunden (siehe zum Beispiel Figuren 4 oder 7), dass die Fixierungsstege 22a, 23a bzw. 22b, 23b eine L-förmige Gestalt aufweisen. Die symmetrische Ausgestaltung des Außenrohrbogens 2 hat den Zweck, dass der Innenrohrbogen 3 mit seiner Einsteckmuffe 18 in beide Mündungen 16, 17 des Außenrohrbogens 2 eingebracht und mit diesem verbunden werden kann. Es wird folglich die Flexibilität erhöht. Dabei umfasst die Rastverbindung 21 ferner bei der ersten Ausführungsform ein Paar von Einstecktaschen 25a und 25b, die sich von der Außenseite 26 des Innenrohrbogens 3 radial und in Richtung der ersten Längsachse 12 erstrecken.

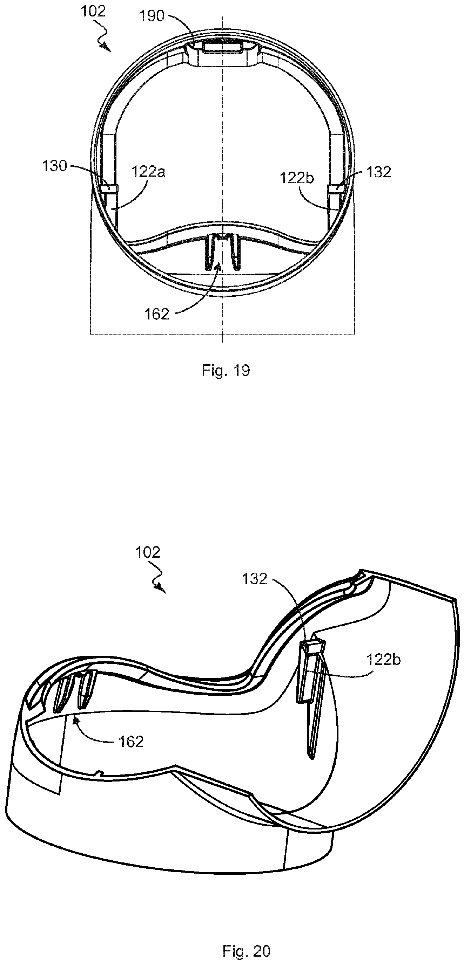

Bei der zweiten Ausführungsform umfasst die Rastverbindung 21 ein Paar von Fixierungsstegen 122a, 122b (siehe zum Beispiel Figur 19), die sich von der Innenseite 24 des Außenrohrbogens 102 radial und in Richtung der ersten Längsachse 12 erstrecken. Wie beispielsweise aus Figur 19 zu erkennen ist, ist bei der zweiten Ausführungsform nur ein Paar von Fixierungsstegen 122a, 122b vorgesehen, weil es bei dieser Ausführungsform nur möglich ist, den Innenrohrbogen 103 über die Mündung 16 in den Außenrohrbogen 102 einzubringen. Der Grund ist ganz einfach darin zu sehen, dass bei der zweiten Ausführungsform Revisionsöffnungen sowohl beim Innenrohrbogen 103 als auch beim Außenrohrbogen 2 vorgesehen sind, so dass der Innenrohrbogen 3 und der Außenrohrbogen 102 unsymmetrisch ausgebildet sind, wohingegen zumindest der Außenrohrbogen 2 der ersten Ausführungsform symmetrisch ausgebildet ist. Ferner umfasst die Rastverbindung 21 bei der zweiten Ausführungsform ein Paar von Einstecktaschen 125a und 125b, die sich von der Außenseite 26 des Innenrohrbogens 103 radial und in Richtung der ersten Längsachse 12 erstrecken.

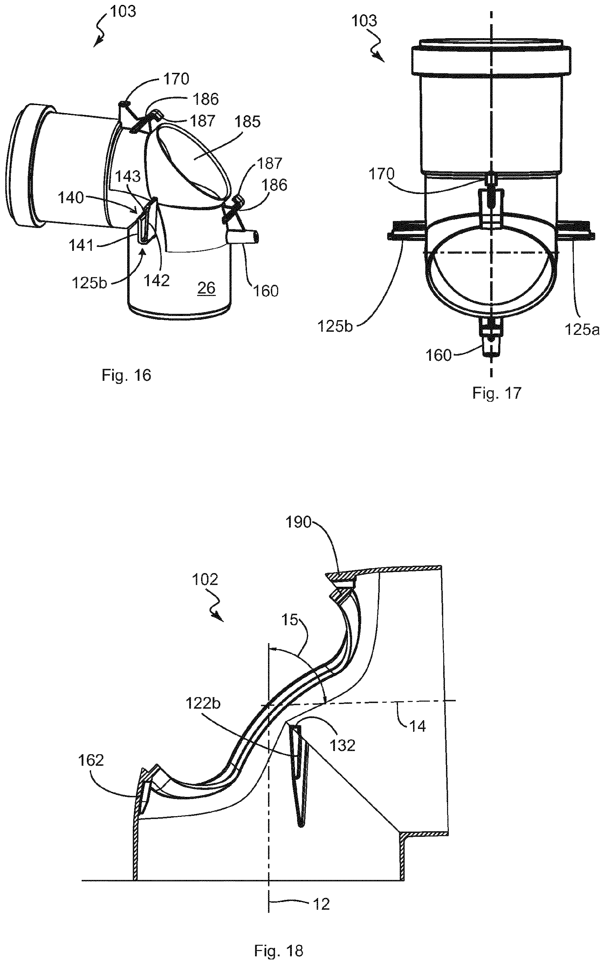

Bei der ersten und zweiten Ausführungsform ist ein jeweiliger Fixierungssteg 22a, 22b, 23a, 23b, 122a, 122b in eine zugeordnete Einstecktasche 25a, 25b, 125a, 125b einschoben und steht mit dieser formschlüssig in Eingriff. Bei der ersten Ausführungsform steht beispielsweise der Fixierungssteg 22a (oder der Fixierungssteg 23a bei anderer Einsteckrichtung des Innenrohrbogens 3) mit der Einstecktasche 25a und bei der zweiten Ausführungsform der Fixierungssteg 122a mit der Einstecktasche 125a in Eingriff, um die Rastverbindung 21 herzustellen. Bei beiden Ausführungsformen ist eine jeweilige Einstecktasche 25a, 25b bzw. 125a, 125b U-förmig ausgebildet und weist eine Einstecköffnung 40 bzw. 140, einen Führungsschenkel 41 bzw. 141 und einen parallel zu dem Führungsschenkel 41 bzw. 141 verlaufenden Rastschenkel 42 bzw. 142 auf (siehe zum Beispiel Figur 5 für die erste Ausführungsform und Figur 16 für die zweite Ausführungsform). An dem freien Ende des jeweiligen Rastschenkels 42 bzw. 142 ist ein hakenförmiger Ansatz 43 bzw. 143 angeformt. Dieser hakenförmige Ansatz 43 bzw. 143 eines jeden Rastschenkels 42 bzw. 142 hintergreift ein Längsende 30, 32 oder 31, 33 bzw. 130, 132 des zugeordneten Fixierungsstegs 22a, 22b, 23a, 23b, 122a, 122b. Dabei weist ein jeweiliger Rastschenkel 42 bzw. 142 eine größere Längserstreckung entlang der ersten Längsachse 12 als ein zugeordneter Führungsschenkel 41 bzw. 141 auf. Bei Montage des Doppelrohrbogensystems 1, 101 wird folglich der Innenrohrbogen 3, 103 bei beiden Ausführungsformen mit seiner Steckmuffe 18 voran in die Mündung 16 des Außenrohrbogens 2, 102 eingesteckt, wobei beim Einstecken ein jeweiliger Fixierungssteg 22a, 22b, 122a, 122b in eine Einstecköffnung 40, 140 einer zugeordneten Einstecktasche 25a, 25b, 125a, 125b gelangt und dann zwischen einem zugeordneten Führungsschenkel 41, 141 und einem zugeordneten Rastschenkel 42, 142 in die Einstecktasche 25a, 25b, 125a, 125b eintaucht, bis der jeweilige Fixierungssteg 22a, 22b, 122a, 122b im Wesentlichen vollständig von der Einstecktasche 25a, 25b, 125a, 125b aufgenommen ist, wobei dabei der entsprechende hakenförmige Ansatz 43, 143 das Längsende 30, 32 bzw. 130, 132 des Fixierungsstegs 22a, 22b, 23a, 23b, 122a, 122b hintergreift, wodurch ein jeweiliger Fixierungssteg 22a, 22b, 23a, 23b, 122a, 122b dann in einer zugeordneten Einstecktasche 25a, 25b, 125a, 125b verrastet ist. Zumindest die hakenförmigen Ansätze 43 bzw. 143 der Einstecktaschen 25a, 25b, 125a, 125b sind elastisch ausgebildet, so dass die Rastverbindung 21 auch wieder aufhebbar ist und der Innenrohrbogen 3, 103 von dem Außenrohrbogen 2, 102 demontierbar ist. Die vorstehend beschriebene Rastverbindung 21 gilt für beide in den Figuren gezeigten Ausführungsformen, wobei die Paare von Fixierungsstegen 22a, 22b, 23a, 23b, 122a, 122b zentral zwischen dem ersten Außenrohrbogenabschnitt 4, 104 und dem zweiten Außenrohrbogenabschnitt 5, 105 an dem Außenbogenabschnitt 6, 106 ausgebildet sind. Dabei ist jedes Paar der Fixierungsstege 22a, 22b, 23a, 23b, 122a, 122b diametral zueinander liegend auf gegenüberliegenden Seiten des Außenrohrbogens 2, 102 angeordnet. Ferner sind bei beiden Ausführungsformen die paarweise angeordneten Einstecktaschen 25a, 25b, 125a, 125b zentral zwischen dem ersten Innenrohrbogenabschnitt 7, 107 und dem zweiten Innenrohrbogenabschnitt 8, 108 an dem Innenbogenabschnitt 9, 109 ausgebildet, wobei die Paare von Einstecktaschen 25a, 25b, 125a, 125b diametral zueinander liegend auf gegenüberliegenden Seiten des Innenrohrbogens 3, 103 angeordnet sind.

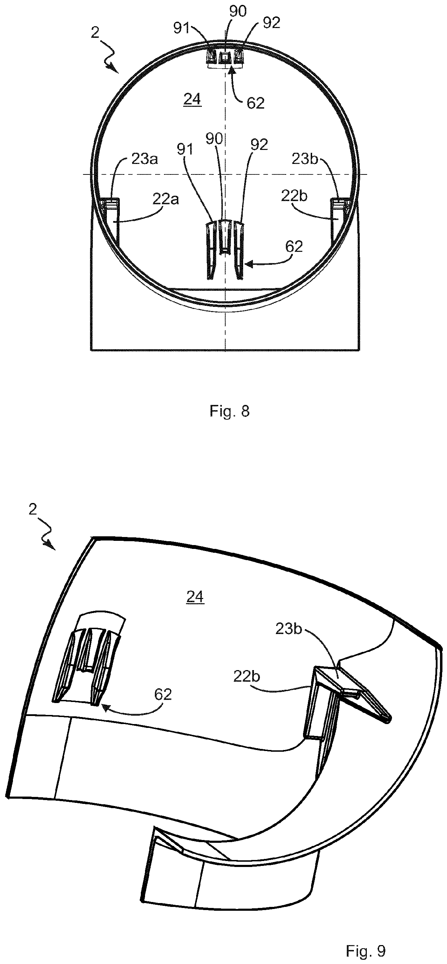

Obgleich die Rastverbindung 21 bei beiden Ausführungsformen aufgrund der Verrastung der Fixierungsstege 22a, 22b, 23a, 23b, 122a, 122b, die ihrer Länge nach in den zugeordneten Einstecktaschen 25a, 25b, 125a, 125b eingeschoben sind, eine sichere und nicht verkippbare formschlüssige Verbindung 20 zwischen Außenrohrbogen 2, 102 und Innenrohrbogen 3, 103 gewährleisten, kann diese zwei Stützpunkte umfassende Verbindung noch durch einen Stützansatz 60, 160 erhöht werden, der sich auf der Außenseite 26 des Innenrohrbogens 3, 103 radial erstreckt. Der Stützansatz 60, 160 erstreckt sich dabei in Richtung der zweiten Längsachse 14. Wie den Figuren 3 und 4 für die erste Ausführungsform und den Figuren 14 und 15 für die zweite Ausführungsform zu entnehmen ist, ist der Stützansatz 60, 160 mit Bezug auf den Umfang des Innenrohrbogens 3, 103 mittig zwischen dem Paar von Einstecktaschen 25a, 25b, 125a, 125b auf der Außenseite 26 des Innenrohrbogens 3, 103 angeformt und stützt sich auf der Innenfläche 24 des Außenrohrbogens 2, 102 ab. Als Notbehelf ist dabei vorgesehen, dass der Stützansatz 60, 160 eine Bohrung 61, 161 aufweist, wie es beispielsweise aus den Figuren 3 und 14 zu sehen ist. In die Bohrung 61, 161 kann von der Außenseite des Außenrohrbogens 2, 102 eine Schraube eingeschraubt werden, sollte die Rastverbindung Schwächen aufweisen oder beschädigt sein, wobei diese Schraubverbindung mittels der Bohrung 61, 161 auch zusätzlich zur Rastverbindung 21 genutzt werden kann, um die Festigkeit der Verbindung von Außenrohrbogen 2, 102 und Innenrohrbogen 3 zu erhöhen. Zur Erhöhung der Montagegenauigkeit ist in Bezug auf den Stützansatz 60, 160 bei beiden Ausführungsformen ein U-förmig ausgebildetes Haltemittel 62, 162 auf der Innenseite 24 des Außenrohrbogens 2, 102 angeformt (siehe zum Beispiel Figuren 7, 8 und 9 für die erste Ausführungsform und Figuren 18, 19 und 20 für die zweite Ausführungsform). Im montierten Zustand des Doppelrohrbogensystems 1, 101 ist der Stützansatz 60, 160 zwischen den parallel zueinander verlaufenden Schenkeln des U-förmigen Haltemittels 62, 162 angeordnet. Wie beispielsweise den Figuren 9 und 20 zu entnehmen ist, wird das U-förmige Haltemittel 62, 162 von drei Stegen gebildet, die auf der Innenseite 24 des Außenrohrbogens 2, 102 angeformt sind und sich dort radial erstrecken. Aus Symmetriegründen, die vorstehend bereits angesprochen wurden, weist die erste Ausführungsform zwei Haltemittel 62 auf, so dass der Innenrohrbogen 3 mit seiner Steckmuffe 18 in beide Mündungen des Außenrohrbogens 2 einbringbar ist und dem Stützansatz 60 eine Möglichkeit der Abstützung durch ein entsprechendes Haltemittel 62 gegeben ist. Für beide Ausführungsformen gilt aber wiederum, dass das U-förmige Haltemittel 62, 162 mit Bezug auf den Umfang des Innenrohrbogens 3, 103 mittig zwischen den paarweise angeordneten Fixierungsstegen 22a, 22b, 23a, 23b, 122a, 122b angeordnet ist und dass der Stützansatz 60, 160 im montierten Zustand des Doppelrohrbogensystems 1, 101 zwischen den beiden Schenkeln des U-förmig ausgebildeten Haltemittels 62, 162 angeordnet ist.

Zur weiteren Erhöhung der Stabilität der Rastverbindung 21 ist bei beiden Ausführungsformen ein Führungsansatz 70, 170 vorgesehen, der sich auf der Außenseite des Innenrohrbogens 3, 103 radial und in Richtung der ersten Längsachse 12 erstreckt. Dabei ist der Führungsansatz 70, 170 mit einem T-förmigen Kopf ausgebildet. Bei der ersten Ausführungsform wird das im montierten Zustand des Doppelrohrbogensystems 1 nicht von dem Stützansatz 60 genutzte Haltemittel 62 von dem Führungsansatz 70 als ein Aufnahmemittel genutzt. Dabei liegt der T-förmige Kopf des Führungsansatzes 70 an dem Abschnitt 90 des U-förmigen Haltemittels 62 an, welcher zwischen den beiden parallel zueinander verlaufenden Schenkeln 91, 92 des U-förmigen Haltemittels 62 angeordnet ist (siehe beispielsweise Figuren 3, 8, 10 und 11 für die erste Ausführungsform). Auf diese Weise blockiert der Blockierungsabschnitt bzw. Abschnitt 90 des U-förmigen Haltemittels 62 eine Bewegung Führungsansatzes und damit des Innenrohrbogens 3 in Richtung der Mündung 16 des Außenrohrbogens 2, so dass eine Bewegung der Fixierungsstege 22a, 22b aus den zugeordneten Einstecktaschen 25a, 25b und damit eine Aufhebung der Rastverbindung 21 verhindert wird. Bei der zweiten Ausführungsform ist zu diesem Zweck ein Ansatz 190 (siehe zum Beispiel Figur 18) auf der Innenseite 24 des Außenrohrbogens 102 angeformt, der primär dazu dient, einen Riegel 180 zu fixieren, der einen Deckel 181 an dem Außenrohrbogen 102 fixieren soll, der eine Revisionsöffnung 182 in dem Außenrohrbogen 102 verschließt. An diesem Blockierungsansatz bzw. Ansatz 190 liegt im montierten Zustand des Doppelrohrbogensystems 101 der T-förmige Kopf des Führungsansatz 170 an, so dass auch bei der zweiten Ausführungsform eine Bewegung des Innenrohrbogens 103 in Richtung der Mündung 16 des Außenrohres 102 und damit eine Bewegung der Fixierungsstege 122a, 122b aus den zugeordneten Einstecktaschen 125a, 125b wirksam blockiert ist, wodurch einer Aufhebung der Rastverbindung 21 entgegengewirkt wird.

Bei der ersten Ausführungsform sind die Haltemittel 62, die gleichzeitig dem Aufnahmemittel entsprechen, am Übergang von dem ersten Außenrohrbogenabschnitt 4 zu dem Außenbogenabschnitt 6 bzw. von dem zweiten Außenrohrbogenabschnitt 5 zu dem Außenbogenabschnitt 6 ausgebildet. Bei der zweiten Ausführungsform ist das Haltemittel 162 am Übergang von dem ersten Außenrohrbogenabschnitt 104 zu dem Außenbogenabschnitt 106 ausgebildet. Hingegen ist bei beiden Ausführungsformen der Führungsansatz 70, 170 mit seinem T-förmigen Kopf am Übergang von dem zweiten Innenrohrbogenabschnitt 8, 108 zu dem Innenbogenabschnitt 9, 109 ausgebildet.

Wie vorstehend bereits angedeutet, unterscheidet sich die zweite Ausführungsform von der ersten Ausführungsform dadurch, dass die zweite Ausführungsform über Revisionsöffnungen für beide Rohrbögen 102 und 103 verfügt. Aus diesem Grund weist neben dem Außenrohrbogen 102 mit seiner Revisionsöffnung 182 auch der Innenrohrbogen 103 einen kreisrunden Durchbruch 185 auf. Zwei Haltevorsprünge 186 stehen von der Außenseite 26 des Innenrohrbogens 103 radial hervor. Die Haltevorsprünge 186 sind dabei diametral gegenüberliegend an dem kreisrunden Durchbruch 185 angeordnet und mit jeweils einer zum Durchbruch 185 gerichteten und hakenartig ausgebildeten Nase 187 versehen, um die Oberseite eines in den Durchbruch 185 eingesetzten Deckelelements 188 hintergreifen zu können.

Die vorstehend beschriebene Erfindung ist selbstverständlich nicht auf die beschriebenen und dargestellten Ausführungsformen beschränkt. Es ist ersichtlich, dass an den in der Zeichnung dargestellten Ausführungsformen zahlreiche, dem Fachmann entsprechend der beabsichtigten Anwendung naheliegende Abänderungen vorgenommen werden können, ohne dass dadurch der Bereich der Erfindung verlassen wird. Zur Erfindung gehört alles dasjenige, was in der Beschreibung enthalten und/oder in der Zeichnung dargestellt ist, einschließlich dessen, was abweichend von den konkreten Ausführungsbeispielen für den Fachmann naheliegt.

## Patentansprüche

1. Doppelrohrbogensystem (1; 101), aufweisend einen Außenrohrbogen (2; 102) und einen von dem Außenrohrbogen (2; 102) umgebenen Innenrohrbogen (3; 103),
wobei der Außenrohrbogen (2; 102) einen ersten Außenrohrbogenabschnitt (4; 104) und einen zweiten Außenrohrbogenabschnitt (5; 105) umfasst, die über einen Außenbogenabschnitt (6; 106) miteinander verbunden sind,
wobei der Innenrohrbogen (3; 103) einen ersten Innenrohrbogenabschnitt (7; 107) und einen zweiten Innenrohrbogenabschnitt (8; 108) umfasst, die über einen Innenbogenabschnitt (9; 109) miteinander verbunden sind,
wobei der erste Außenrohrbogenabschnitt (4; 104) und der erste Innenrohrbogenabschnitt (7; 107) konzentrisch zu einer ersten Längsachse (12) angeordnet sind,
wobei der zweite Außenrohrbogenabschnitt (5; 105) und der zweite Innenrohrbogenabschnitt (8; 108) konzentrisch zu einer zweiten Längsachse (14) angeordnet sind, und
wobei der Außenrohrbogen (2; 102) und der Innenrohrbogen (3; 103) über eine formschlüssige Verbindung (20) miteinander verbunden sind,
**dadurch gekennzeichnet, dass**
die formschlüssige Verbindung (20) eine Rastverbindung (21) ist, die wenigstens zwei Fixierungsstege (22a, 22b, 23a, 23b; 122a, 122b), die sich von der Innenseite (24) des Außenrohrbogens (2; 102) radial und wenigstens in Richtung der ersten Längsachse (12) erstrecken, und wenigstens zwei Einstecktaschen (25a, 25b; 125a, 125b), die sich von der Außenseite (26) des Innenrohrbogens (3; 103) radial und wenigstens in Richtung der ersten Längsachse (12) erstrecken, umfasst, wobei ein jeweiliger Fixierungssteg (22a, 22b, 23a, 23b; 122a, 122b) in eine zugeordnete Einstecktasche (25a, 25b; 125a, 125b) eingeschoben ist und mit dieser formschlüssig in Eingriff steht.

2. Doppelrohrbogensystem (1; 101) nach Anspruch 1, **dadurch gekennzeichnet, dass** eine jeweilige Einstecktasche (25a, 25b; 125a, 125b) U-förmig mit einer Einstecköffnung (40; 140), einem Führungsschenkel (41; 141) und einem parallel zum Führungsschenkel (41; 141) verlaufenden Rastschenkel (42; 142) ausgebildet ist, wobei der Rastschenkel (42; 142) eine größere Längserstreckung entlang der ersten Längsachse (12) als der Führungsschenkel (41; 141) aufweist, und wobei an dem freien Ende des Rastschenkels (42; 142) ein hakenförmiger Ansatz (43; 143) angeformt ist, der ein Längsende (30, 31, 32, 33; 130, 132) des zugeordneten Fixierungsstegs (22a, 22b, 23a, 23b; 122a, 122b) hintergreift.

3. Doppelrohrbogensystem (1; 101) nach Anspruch 1 oder 2, **dadurch gekennzeichnet, dass** sich auf der Außenseite (26) des Innenrohrbogens (3; 103) wenigstens ein Stützansatz (60; 160) radial erstreckt, wobei der wenigstens eine Stützansatz (60; 160) mit Bezug auf den Umfang des Innenrohrbogens (3; 103) mittig zwischen den wenigstens zwei Einstecktaschen (25a, 25b; 125a, 125b) auf der Außenseite (26) des Innenrohrbogens (3; 103) angeformt ist und sich auf der Innenfläche (24) des Außenrohrbogens (2; 102) abstützt.

4. Doppelrohrbogensystem (1; 101) nach Anspruch 3, **dadurch gekennzeichnet, dass** sich der wenigstens eine Stützansatz (60; 160) in Richtung der zweiten Längsachse (14) erstreckt.

5. Doppelrohrbogensystem (1; 101) nach Anspruch 3 oder 4, **dadurch gekennzeichnet, dass** wenigstens ein U-förmig ausgebildetes Haltemittel (62; 162) auf der Innenseite (24) des Außenrohrbogens (2; 102) angeformt ist, das mit Bezug auf den Umfang des Innenrohrbogens (3; 103) mittig zwischen den wenigstens zwei Fixierungsstegen (22a, 22b, 23a, 23b; 122a, 122b) angeordnet ist, wobei der wenigstens eine Stützansatz (60; 160) zwischen den beiden parallel zueinander verlaufenden Schenkeln des U-förmig ausgebildeten Haltemittels (62; 162) angeordnet ist.

6. Doppelrohrbogensystem (1; 101) nach Anspruch 3, 4 oder 5, **dadurch gekennzeichnet, dass** der wenigstens eine Stützansatz (60; 160) eine Bohrung (61; 161) aufweist, die für ein von der Außenseite des Außenrohrbogens (2; 102) einbringbares Einschraubmittel vorgesehen ist.

7. Doppelrohrbogensystem (1; 101) nach einem der vorhergehenden Ansprüche, **dadurch gekennzeichnet, dass** die wenigstens zwei Fixierungsstege (22a, 22b, 23a, 23b; 122a, 122b) zentral zwischen dem ersten Außenrohrbogenabschnitt (4; 104) und dem zweiten Außenrohrbogenabschnitt (5; 105) an dem Außenbogenabschnitt (6; 106) ausgebildet sind und dass die wenigstens zwei Einstecktaschen (25a, 25b; 125a, 125b) zentral zwischen dem ersten Innenrohrbogenabschnitt (7; 107) und dem zweiten Innenrohrbogenabschnitt (8; 108) an dem Innenbogenabschnitt (9; 109) ausgebildet sind.

8. Doppelrohrbogensystem (1; 101) nach einem der vorhergehenden Ansprüche, **dadurch gekennzeichnet, dass** sich auf der Außenseite (26) des Innenrohrbogens (3; 103) wenigstens ein Führungsansatz (70; 170) radial und in Richtung der ersten Längsachse (12) erstreckt, wobei der wenigstens eine Führungsansatz (70; 170) mit einem T-förmigen Kopf ausgebildet ist.

9. Doppelrohrbogensystem (1; 101) nach Anspruch 8, **dadurch gekennzeichnet, dass** wenigstens ein U-förmig ausgebildetes Aufnahmemittel (62; 162) derart korrespondierend zu dem wenigstens einen Führungsansatz (70; 170) auf der Innenseite (24) des Außenrohrbogens (2; 102) angeformt ist, dass der T-förmig ausgebildete Kopf des Führungsansatzes (70; 170) zwischen den parallel zueinander verlaufenden Schenkeln des U-förmig ausgebildeten Aufnahmemittels (62; 162) angeordnet ist und an dem die parallel zueinander verlaufenden Schenkel (91, 92) verbindenden Abschnitt (90; 190) des Aufnahmemittels (62; 162) eine Bewegung des Innenrohrbogens (3; 103) in Richtung des Abschnitts (90; 190) blockierend anliegt.

10. Doppelrohrbogensystem (1; 101) nach Anspruch 9, **dadurch gekennzeichnet, dass** das wenigstens eine Aufnahmemittel (62; 162) am Übergang von dem zweiten Außenrohrbogenabschnitt (5; 105) zu dem Außenbogenabschnitt (6; 106) ausgebildet ist und dass der wenigstens eine Führungsansatz (70; 170) am Übergang von dem zweiten Innenrohrbogenabschnitt (8; 108) zu dem Innenbogenabschnitt (9; 109) ausgebildet ist.

11. Doppelrohrbogensystem (1; 101) nach einem der vorhergehenden Ansprüche, **dadurch gekennzeichnet, dass** die wenigstens zwei Fixierungsstege (22a, 22b, 23a, 23b; 122a, 122b) diametral zueinander liegend auf gegenüberliegenden Seiten des Außenrohrbogens (2; 102) angeordnet sind und dass die wenigstens zwei Einstecktaschen (25a, 25b; 125a, 125b) diametral zueinander liegend auf gegenüberliegenden Seiten des Innenrohrbogens (3; 103) angeordnet sind.

12. Doppelrohrbogensystem (1; 101) nach einem der vorhergehenden Ansprüche, **dadurch gekennzeichnet, dass** der Innenrohrbogen (3; 103) aus den jeweiligen Mündungsrändern (16, 17) des Außenrohrbogens (2; 102) hervorsteht.

13. Doppelrohrsystem (1; 101) nach einem der vorhergehenden Ansprüche, **dadurch gekennzeichnet, dass** die erste Längsachse (12) und die zweite Längsachse (14) im Wesentlichen rechtwinklig oder um einen Winkel (15) zwischen 87° und 89° zueinander geneigt angeordnet sind.

14. Doppelrohrsystem (101) nach einem der vorhergehenden Ansprüche, **dadurch gekennzeichnet, dass** der Innenrohrbogen (103) einen kreisrunden Durchbruch (185) aufweist, wobei wenigstens zwei Haltevorsprünge (186) von der Außenseite (26) des Innenrohrbogens (103) radial hervorstehen, die diametral gegenüberliegend an dem kreisrunden Durchbruch (185) angeordnet sind und mit jeweils einer zum Durchbruch (185) gerichteten und hakenartig ausgebildeten Nase (187) versehen sind, die eine Oberseite eines in den Durchbruch (185) eingesetzten Deckelelements (188) hintergreift.

15. Doppelrohrsystem (101) nach einem der vorhergehenden Ansprüche, **dadurch gekennzeichnet, dass** der Außenrohrbogen (102) eine Revisionsöffnung (182) aufweist, die mit Hilfe eines Deckels (181) verschlossen ist.

## Claims

1. A double tube sheet system (1; 101), comprising an outer tube sheet (2; 102) and an inner tube sheet (3; 103) surrounded by the outer tube sheet (2; 102),
wherein the outer tube sheet (2; 102) comprises a first outer tube sheet section (4; 104) and a second outer tube sheet section (5; 105), which are connected to one another via an outer sheet section (6; 106),
wherein the inner tube sheet (3; 103) comprises a first inner tube sheet section (7; 107) and a second inner tube sheet section (8; 108) which are connected to one another via an inner sheet section (9; 109),
wherein the first outer tube sheet section (4; 104) and the first inner tube sheet section (7; 107) are arranged concentrically to a first longitudinal axis (12),
wherein the second outer tube sheet section (5; 105) and the second inner tube sheet section (8; 108) are arranged concentrically to a second longitudinal axis (14) and
wherein the outer tube sheet (2; 102) and the inner tube sheet (3; 103) are connected to one another via a form-fit connection (20),
**characterized in that**
the form-fit connection (20) is a latching connection (21), which comprises at least two fixing webs (22a, 22b, 23a, 23b; 122a, 122b) which extend radially from the inner side (24) of the outer tube sheet (2; 102) and at least in the direction of the first longitudinal axis (12) and at least two insertion pockets (25a, 25b; 125a, 125b) which extend radially from the outer side (26) of the inner tube sheet (3; 103) and at least in the direction of the first longitudinal axis (12), wherein a respective fixing web (22a, 22b, 23a, 23b; 122a, 122b) is inserted into an associated insertion pocket (25a, 25b; 125a, 125b) and is in form-fit engagement with this.

2. The double tube sheet system (1; 101) according to claim 1, **characterized in that** a respective insertion pocket (25a, 25b; 125a, 125b) is configured in a U shape with an insertion opening (40; 140), a guide leg (41; 141) and a latching leg (42; 142) running parallel to the guide leg (41; 141), wherein the latching leg (42; 142) has a greater longitudinal extension along the first longitudinal axis (12) than the guide leg (41; 141) and wherein a hook-shaped attachment (43; 143) is formed on the free end of the latching leg (42; 142) which engages behind a longitudinal end (30, 31, 32, 33; 130, 132) of the associated fixing web (22a, 22b, 23a, 23b; 122a, 122b).

3. The double tube sheet system (1; 101) according to claim 1 or 2, **characterized in that** at least one supporting attachment (60; 160) extends radially on the outer side (26) of the inner tube sheet (3; 103), wherein the at least one supporting attachment (60; 160) is formed with reference to the circumference of the inner tube sheet (3; 103) centrally between the at least two insertion pockets (25a, 25b; 125a, 125b) on the outer side (26) of the inner tube sheet (3; 103) and is supported on the inner surface (24) of the outer tube sheet (2; 102).

4. The double tube sheet system (1; 101) according to claim 3, **characterized in that** the at least one supporting attachment (60; 160) extends in the direction of the second longitudinal axis (14).

5. The double tube sheet system (1; 101) according to claim 3 or 4, **characterized in that** at least one U-shaped retaining means (62; 162) is formed on the inner side (24) of the outer tube sheet (2; 102) which is arranged with reference to the circumference of the inner tube sheet (3; 103) centrally between the at least two fixing webs (22a, 22b, 23a, 23b; 122a, 122b), wherein the at least one supporting attachment (60; 160) is arranged between the two parallel-running legs of the U-shaped retaining means (62; 162).

6. The double tube sheet system (1; 101) according to claim 3, 4 or 5, **characterized in that** the at least one supporting attachment (60; 160) has a bore (61; 161) which is provide for screw-in means which can be introduced from the outer side of the outer tube sheet (2; 102).

7. The double tube sheet system (1; 101) according to one of the preceding claims, **characterized in that** the at least two fixing webs (22a, 22b, 23a, 23b; 122a, 122b) are formed centrally between the first outer tube sheet section (4; 104) and the second outer tube sheet section (5; 105) on the outer sheet section (6; 106) and that the at least two insertion pockets (25a, 25b; 125a, 125b) are formed centrally between the first inner tube sheet section (7; 107) and the second inner tube sheet section (8; 108) on the inner sheet section (9; 109).

8. The double tube sheet system (1; 101) according to one of the preceding claims, **characterized in that** on the outer side (26) of the inner tube sheet (3; 103) at least one guide attachment (70; 170) extends radially and in the direction of the first longitudinal axis (12), wherein the at least one guide attachment (70; 170) is formed with a T-shaped head.

9. The double tube sheet system (1; 101) according to claim 8, **characterized in that** at least one U-shaped receiving means (62; 162) is formed to correspond to the at least one guide attachment (70; 170) on the inner side (24) of the outer tube sheet (2; 102) in such a manner that the T-shaped head of the guide attachment (70; 170) is arranged between the legs of the U-shaped receiving means (62; 162) running parallel to one another and rests on the section (90; 190) of the receiving means (62; 162) which connects the legs (91, 92) running parallel to one another so that it blocks a movement of the inner tube sheet (3; 103) in the direction of the section (90; 190).

10. The double tube sheet system (1; 101) according to claim 9, **characterized in that** the at least one receiving means (62; 162) is formed at the transition from the second outer tube sheet section (5; 105) to the outer sheet section (6; 106) and that the at least one guide attachment (70; 170) is formed at the transition from the second inner tube sheet section (8; 108) to the inner sheet section (9; 109).

11. The double tube sheet system (1; 101) according to one of the preceding claims, **characterized in that** the at least two fixing webs (22a, 22b, 23a, 23b; 122a, 122b) are arranged diametrically with respect to one another lying on opposite sides of the outer tube sheet (2; 102) and that the at least two insertion pockets (25a, 25b; 125a, 125b) are arranged diametrically with respect to one another lying on opposite sides of the inner tube sheet (3; 103).

12. The double tube sheet system (1; 101) according to one of the preceding claims, **characterized in that** the inner tube sheet (3; 103) protrudes from the respective mouth edges (16, 17) of the outer tube sheet (2; 102).

13. The double tube sheet system (1; 101) according to one of the preceding claims, **characterized in that** the first longitudinal axis (12) and the second longitudinal axis (14) are arranged substantially at right angles or inclined by an angle (15) between 87° and 89° with respect to one another.

14. The double tube sheet system (101) according to one of the preceding claims, **characterized in that** the inner tube sheet (103) has a circular opening (185), wherein at least two retaining projections (186) protrude radially from the outer side (26) of the inner tube sheet (103), which are arranged diametrically opposite on the circular opening (185) and are provided with respectively one lug (187) which is directed towards the opening (185) and configured in a hook-like manner, which engages behind an upper side of a cover element (188) inserted in the opening (185).

15. The double tube sheet system (101) according to one of the preceding claims, **characterized in that** the outer tube sheet (102) has an inspection opening (182) which is closed by means of a cover (181).

## Revendications

1. Système de raccord coudé double (1 ; 101) présentant un raccord coudé extérieur (2 ; 102) et un raccord coudé intérieur (3 ; 103) entouré par le raccord coudé extérieur (2 ; 102),
dans lequel le raccord coudé extérieur (2 ; 102) comprend une première partie de raccord coudé extérieur (4 ; 104) et une deuxième partie de raccord coudé extérieur (5 ; 105), lesquelles sont reliées l'une à l'autre par l'intermédiaire d'une partie coudée extérieure (6 ; 106),
dans lequel le raccord coudé intérieur (3 ; 103) comprend une première partie de raccord coudé intérieur (7 ; 107) et une deuxième partie de raccord coudé intérieur (8 ; 108), lesquelles sont reliées l'une à l'autre par l'intermédiaire d'une partie coudée intérieure (9 ; 109),
dans lequel la première partie de raccord coudé extérieur (4 ; 104) et la première partie de raccord coudé intérieur (7 ; 107) sont disposées de manière concentrique à un premier axe longitudinal (12),
dans lequel la deuxième partie de raccord coudé extérieur (5 ; 105) et la deuxième partie de raccord coudé intérieur (8 ; 108) sont disposées de manière concentrique à un deuxième axe longitudinal (14), et
dans lequel le raccord coudé extérieur (2 ; 102) et le raccord coudé intérieur (3 ; 103) sont reliés l'un à l'autre par l'intermédiaire d'une liaison par complémentarité de formes (20),
**caractérisé en ce que**
la liaison par complémentarité de formes (20) est une liaison d'encliquetage (21), laquelle comprend au moins deux entretoises de fixation (22a, 22b, 23a, 23b ; 122a, 122b) qui s'étendent à partir du côté intérieur (24) du raccord coudé extérieur (2 ; 102) de façon radiale et au moins en direction du premier axe longitudinal (12), et au moins deux poches d'insertion (25a, 25b ; 125a, 125b) qui s'étendent à partir du côté extérieur (26) du raccord coudé intérieur (3 ; 103) de façon radiale et au moins en direction du premier axe longitudinal (12), dans lequel une entretoise de fixation (22a, 22b, 23a, 23b ; 122a, 122b) respective est insérée dans une poche d'insertion (25a, 25b ; 125a, 125b) associée et est en prise avec celle-ci par complémentarité de formes.

2. Système de raccord coudé double (1 ; 101) selon la revendication 1, **caractérisé en ce qu'**une poche d'insertion (25a, 25b ; 125a, 125b) respective est réalisée en forme de U avec une ouverture d'insertion (40 ; 140), une branche de guidage (41 ; 141) et une branche d'encliquetage (42 ; 142) s'étendant parallèlement à la branche de guidage (41 ; 141), dans lequel la branche d'encliquetage (42 ; 142) présente une plus grande étendue longitudinale le long du premier axe longitudinal (12) que la branche de guidage (41 ; 141), et dans lequel un prolongement en forme de crochet (43 ; 143) est formé sur l'extrémité libre de la branche d'encliquetage (42 ; 142), lequel saisit par l'arrière une extrémité longitudinale (30, 31, 32, 33 ; 130, 132) de l'entretoise de fixation (22a, 22b, 23a, 23b ; 122a, 122b) associée.

3. Système de raccord coudé double (1 ; 101) selon la revendication 1 ou 2, **caractérisé en ce que**, sur le côté extérieur (26) du raccord coudé intérieur (3 ; 103), au moins un prolongement de support (60 ; 160) s'étend radialement, dans lequel l'au moins un prolongement de support (60 ; 160) est formé par rapport à la périphérie du raccord coudé intérieur (3 ; 103) de manière centrale entre les au moins deux poches d'insertion (25a, 25b ; 125a, 125b) sur le côté extérieur (26) du raccord coudé intérieur (3 ; 103) et est en appui sur la surface intérieure (24) du raccord coudé extérieur (2 ; 102).

4. Système de raccord coudé double (1 ; 101) selon la revendication 3, **caractérisé en ce que** l'au moins un prolongement de support (60 ; 160) s'étend en direction du deuxième axe longitudinal (14).

5. Système de raccord coudé double (1 ; 101) selon la revendication 3 ou 4, **caractérisé en ce qu'**au moins un moyen de retenue (62 ; 162) réalisé en forme de U est formé sur le côté intérieur (24) du raccord coudé extérieur (2 ; 102), lequel est disposé par rapport à la périphérie du raccord coudé intérieur (3 ; 103) de manière centrale entre les au moins deux entretoises de fixation (22a, 22b, 23a, 23b ; 122a, 122b), dans lequel l'au moins un prolongement de support (60 ; 160) est disposé entre les deux branches s'étendant parallèlement entre elles du moyen de retenue (62 ; 162) réalisé en forme de U.

6. Système de raccord coudé double (1 ; 101) selon la revendication 3, 4 ou 5, **caractérisé en ce que** l'au moins un prolongement de support (60 ; 160) présente un alésage (61 ; 161) prévu pour un moyen de vissage pouvant être introduit depuis le côté extérieur du raccord coudé extérieur (2 ; 102).

7. Système de raccord coudé double (1 ; 101) selon l'une des revendications précédentes, **caractérisé en ce que** les au moins deux entretoises de fixation (22a, 22b, 23a, 23b ; 122a, 122b) sont réalisées de manière centrale entre la première partie de raccord coudé extérieur (4 ; 104) et la deuxième partie de raccord coudé extérieur (5 ; 105) sur la partie coudée extérieure (6 ; 106) et que les au moins deux poches d'insertion (25a, 25b ; 125a, 125b) sont réalisées de manière centrale entre la première partie de raccord coudé intérieur (7 ; 107) et la deuxième partie de raccord coudé intérieur (8 ; 108) sur la partie coudée intérieure (9 ; 109).

8. Système de raccord coudé double (1 ; 101) selon l'une des revendications précédentes, **caractérisé en ce que**, sur le côté extérieur (26) du raccord coudé intérieur (3 ; 103), au moins un prolongement de guidage (70 ; 170) s'étend radialement et en direction du premier axe longitudinal (12), dans lequel l'au moins un prolongement de guidage (70 ; 170) est réalisé avec une tête en forme de T.

9. Système de raccord coudé double (1 ; 101) selon la revendication 8, **caractérisé en ce qu'**au moins un moyen de réception (62 ; 162) réalisé en forme de U est formé de manière correspondante à l'au moins un prolongement de guidage (70 ; 170) sur le côté intérieur (24) du raccord coudé extérieur (2 ; 102) de manière à ce que la tête réalisée en forme de T du prolongement de guidage (70 ; 170) est disposée entre les branches s'étendant parallèlement entre elles du moyen de réception (62 ; 162) réalisé en forme de U et qu'au niveau de la partie (90 ; 190) reliant les branches (91, 92) s'étendant parallèlement entre elles du moyen de réception (62 ; 162), un mouvement du raccord coudé intérieur (3 ; 103) arrive en butée de manière bloquante en direction de la partie (90 ; 190) .

10. Système de raccord coudé double (1 ; 101) selon la revendication 9, **caractérisé en ce que** l'au moins un moyen de réception (62 ; 162) est réalisé au niveau de la transition de la deuxième partie de raccord coudé extérieur (5 ; 105) vers la partie coudée extérieure (6 ; 106) et que l'au moins un prolongement de guidage (70 ; 170) est réalisé au niveau de la transition de la deuxième partie de raccord coudé intérieur (8 ; 108) vers la partie coudée intérieure (9 ; 109).

11. Système de raccord coudé double (1 ; 101) selon l'une des revendications précédentes, **caractérisé en ce que** les au moins deux entretoises de fixation (22a, 22b, 23a, 23b ; 122a, 122b) sont disposées de manière à être situées diamétralement entre elles sur des côtés situés en vis-à-vis du raccord coudé extérieur (2 ; 102) et que les au moins deux poches d'insertion (25a, 25b ; 125a, 125b) sont disposées de manière à être situées diamétralement entre elles sur des côtés situés en vis-à-vis du raccord coudé intérieur (3 ; 103) .

12. Système de raccord coudé double (1 ; 101) selon l'une des revendications précédentes, **caractérisé en ce que** le raccord coudé intérieur (3 ; 103) dépasse des bords d'embouchure respectifs (16, 17) du raccord coudé extérieur (2 ; 102).

13. Système de raccord double (1 ; 101) selon l'une des revendications précédentes, **caractérisé en ce que** le premier axe longitudinal (12) et le deuxième axe longitudinal (14) sont disposés sensiblement en angle droit ou de manière inclinée l'un par rapport à l'autre selon un angle (15) compris entre 87° et 89°.

14. Système de raccord double (101) selon l'une des revendications précédentes, **caractérisé en ce que** le raccord coudé intérieur (103) présente une percée circulaire (185), dans lequel au moins deux saillies de retenue (186) dépassent radialement du côté extérieur (26) du raccord coudé intérieur (103), lesquelles sont disposées de manière à être situées diamétralement en vis-à-vis sur la percée circulaire (185) et sont respectivement dotées d'un bec (187) orienté vers la percée (185) et réalisé à la manière d'un crochet, lequel saisit par l'arrière un côté supérieur d'un élément de couvercle (188) placé dans la percée (185).

15. Système de raccord double (101) selon l'une des revendications précédentes, **caractérisé en ce que** le raccord coudé extérieur (102) présente une ouverture de révision (182), laquelle est fermée à l'aide d'un couvercle (181).
